# EUROPEAN PATENT APPLICATION

(11) **EP 2 757 651 A1**
(43) Date of publication of application: **23.07.2014**
(21) Application number: 13305062.5
(22) Date of filing: 18.01.2013
(51) Int. Cl.: H02J 3/32, H02J 3/28

(54) **A device and a method for controlling power for a system of controller and energy storage**

(71) Applicant: Alcatel Lucent, 75007 Paris (FR)
(72) Inventor: Weigmann, Walter, 70435 Stuttgart (DE); Templ, Wolfgang, 70435 Stuttgart (DE)
(74) Representative: Kröhnert, Michael

(57) **Abstract**

The invention concerns controller (100) for a system of controller (100) and energy storage (110), comprising
- a processor (101) operable to predict a load characteristic, in particular an electrical load characteristic or a load characteristic related to at least a part of a power grid (130), preferably a low voltage power grid (130), and
- an actuator (102) operable to control power transfer between the energy storage (110) and the power grid (130) depending on the predicted load characteristic. The invention concerns also an energy storage (110) comprising the controller (100) and a method for controlling such system or energy storage.

Furthermore the invention concerns a method for a controller and energy storage to adjust the statistical load pulses distribution of an electrical grid load according to a set of statistical target parameters.

## Description

### Field of the invention

The invention relates to a device and a method for controlling power for a system of controller and energy storage.

### Background

In existing power grids load balancing is essential in order to keep the power grids stable and avoid power brownouts or blackouts. Load balancing is performed at the power plants by controlling either frequency or voltage of the supply grids. Additionally statistic analysis regarding the load on power grids is performed to design and dimension the components to avoid any overload situations. Moreover the design of today's power grids considers the averaging effect of a statistical random distribution of numerous load spikes in the lowest grid level. However, in complex power grids, having multiple decentralized power plants, such as solar or wind power plants, the frequency or voltage control at the supply side is not sufficient to optimally use the power grid.

### Summary

The object of the invention is thus to improve the load balancing and hence robustness in particular for low voltage power grids in a decentralized manner.

For controlling power for a system of controller and energy storage a controller is used comprising
- a processor operable to predict a load characteristic, in particular an electrical load characteristic or a load characteristic related to at least a part of a power grid, preferably a low voltage power grid, and
- an actuator operable to control power transfer between the energy storage and the power grid depending on the predicted load characteristic.

Advantageously the controller comprises a receiver operable to receive information indicative of actual load.

Advantageously the processor is operable to derive or predict statistical parameters of load pulse distribution depending on the received information.

Advantageously the processor is adapted to predict the load characteristic by a statistical analysis of the actual load yielding a load pulse distribution.

Advantageously the actuator is operable to arrange for output of energy from the energy storage, when the predicted load characteristic satisfies a first condition.

Advantageously the receiver is operable to receive information indicative of the first condition.

Advantageously the actuator is operable to arrange for storing energy in the energy storage when the predicted load characteristic satisfies a second condition.

Advantageously the receiver is operable to receive information indicative of the second condition.

Furthermore the energy storage may comprise the aforementioned controller.

Advantageously a corresponding method for a system of a controller and energy storage to adjust the statistical load pulse distribution of an electrical grid load according to a set of statistical target parameters is used.

Further developments of the invention can be gathered from dependent claims and the following description.

### Brief description of the figures

In the following the invention will be explained further making reference to the attached drawings.
Fig. 1 schematically shows a part of a power grid, an energy storage and a controller for controlling power at the energy storage.
Fig. 2 schematically shows a method for controlling load characteristic.

### Description of the embodiments

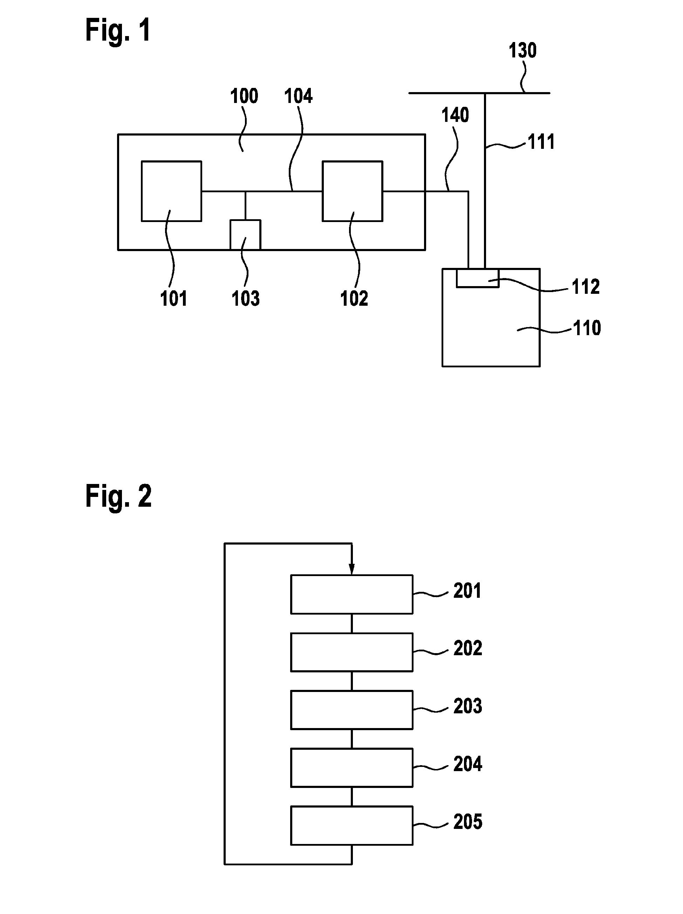

Figure 1 shows a part of a power grid 130, an energy storage 110 and a device, in particular a controller 100 for controlling power transfer between the energy storage 110 and the power grid 130.

The energy storage 110 is connected to the power grid 130 via a leg 111. Preferably the connection is across power electronic 112.

The controller 100 comprises a processor 101, an actuator 102 and a receiver 103, preferably connected to each other via a data bus 104. The processor 101 is connected to a data storage, e.g. a memory.

The actuator 102 and the energy storage 110 are adapted to arrange for output of energy from the energy storage 110, arrange for storing energy in the energy storage 110, or to disconnect the energy storage. To this end the actuator may be connected to the power electronic 112 via a link 140. The link may be a data link or a direct electric link. Alternatively a mechanical link may be used.

The controller 100 and energy storage 110 act together as a system of controller 100 and energy storage 110. This means for example that the controller 100 and the energy storage 110 can be joined to a single device. For example fitting means, e.g. screws or bolts, are arranged at the controller 100 and the energy storage 110 to join both. Alternatively in case the controller 100 and the energy storage 110 are separate, the connection between both is local, e.g. by local area network, wireless local area network, a data bus or direct wire. In particular no central server is used as controller 100. However the controller 100 may comprise of a sender not depicted in figure 1, adapted to send data to a central server. This link is used to submit statistical data determined by the controller 100 to the central server. It is however not used to transmit control commands from the central server to the controller 100. Rather the controller 100 is controlling the energy storage 110 autonomously.

Several controllers 100 may be connected as peers as well. In this case the link or another link may be used to transmit announcements of energy or load pulse injections from a peer controller 100 to another peer controller 100.

The receiver 103 is adapted to receive information indicative of a first condition, a second condition or actual load. The receiver 103 for example is adapted to receive as information about the actual load information from one sensor or more sensors, in the latter case for example distributed throughout the power grid 130. The sensors are for example power meters or smart meters capable of measuring the load in the power grid 130. The information indicative of the load may be an actual load on a predetermined part of the power grid 130. The part may be regionally limited to a certain geographic area or may be the low power grid of a residential area. The actual load is for example measured in Kilowatt hour by one or more sensors in the predetermined part of the power grid 130. The actual load is for example received by the receiver 103 in predetermined time intervals from the one or more sensors, e.g. every second. In case more sensors are used, the actual load may be determined from the individually received actual loads by the processor 101, e.g. as the average, maximum or minimum of all received actual load values. Furthermore the actual load may be determined by the processor 101 as the average value of one or more sequential actual loads received by the receiver 103.

As information about the first condition or the second condition for example a predetermined load pulse distribution, i.e. the variation in the electrical load, e.g. in Kilowatts, versus time is received. This predetermined load pulse distribution is for example derived from historic data collected from many controllers 100. Optionally announced load pulse injections from peer controllers 100 may be received and considered.

Alternatively to receiving the first or second condition as predetermined load pulse distribution the first and second condition may be received as a predetermined value, e.g. in Kilowatts.

The processor 101 is adapted to predict a load characteristic depending on the received information, in particular the information indicative of the load.

The processor 101 is adapted to trigger the actuator 102 to arrange for output, storing or disconnecting depending on the prediction. For example the processor 101 is adapted
- to trigger the actuator 102 to arrange for output when the predicted load characteristic satisfies the first condition,
- to trigger the actuator 102 to arrange for storing when the predicted load characteristic satisfies the second condition, or
- to trigger the actuator 102 to arrange for disconnecting the energy storage 110 else.

The prediction is for example a calculation of a predicted load from the actual observed load characteristic. The prediction in one example is based on analysis of the actual load value and previous actual load values. The processor 101 is adapted to derive or predict a load characteristic, in particular the statistical parameters of load pulse distribution. To that end the processor is adapted to store received or determined actual load values in storage. Predictive statistical analysis may comprise of determining a future, i.e. predicted, load characteristic from the history stored by a statistical analysis of the load characteristic yielding a predicted load pulse distribution. Alternatively an extrapolation of the actual load curve may be used to derive the value.

For example, the load predictions may be based on simple extrapolations of the observed load characteristic over time considering the announced load pulse injections autoregressive moving average, autoregressive integrated moving average, the Holt-Winters method or the like, depending upon any load characteristic observed over the calibration period. Moreover the load predictions need to consider the announced load pulse injections from peer systems.

Statistical analysis may comprise e.g. the calculation of frequency distribution of load pulse heights with its statistical parameters, i.e. standard deviation, median and confidence interval by means of mathematical standard procedures

The first condition and the second condition may be satisfied for example when the actual load pulse distribution is equal, greater or less than the predetermined load pulse distribution. For example the first condition is satisfied if at the same point in time the predicted load pulse distribution has no load pulse while the predetermined load pulse distribution has a load pulse. The second condition is for example met if at the same point in time the predicted load pulse distribution has a load pulse while the predetermined load pulse distribution has no load pulse. The point in time may be exactly the same or with tolerance. The actual number of pulses and their distribution in the predetermined load pulse distribution allowable for the predetermined part of the power grid 130 varies with multiple factors like the power grid hardware, time of day, day of week or weather. This information is available for example through the predetermined load pulse distribution. In the example the frequency of load pulses are compared. The load pulses are for example values in Kilowatt.

Alternatively to using Kilowatt any other information indicative of the load pulse may be used. For example frequency or voltage may be used to determine the relevant triggers.

A method for controlling power transfer between the energy storage 110 and the power grid 110 is explained below making reference to figure 2.

The method comprises predicting the load characteristic, in particular the electrical load characteristic or the load characteristic related to at least the part of the power grid 130, preferably the low voltage power grid 130. Furthermore the method comprises controlling power between the energy storage 110 and the power grid 130 depending on the predicted load characteristic.

The controller needs to inform the other participating (peer) systems in the grid in advance about its planned load pulse injection in order to allow them for consideration of this event in their own load prediction scenario.

Controlling the energy flow at the energy storage 110 is advantageously in particular in a low power grid because this way the power in the power grid 130 can be balanced by either output of energy from the energy storage 110, when the predicted load satisfies the first condition, storing energy in the energy storage 110 when the predicted load satisfies the second condition, or disconnecting the energy storage 110 else. Moreover this approach inherits the advantages of a distributed architecture (e.g. avoidance of single point of failure and increased grid resilience).

Furthermore the response time is very short compared to the standard frequency or voltage control. This increases the robustness of the power grid 130.

The output, storing or disconnecting of the energy storage 130 may depend on other factors, such as available storage capacity of the energy storage 130 or a demand by the other energy grid. For example if the storage capacity of the energy storage 130 is used, the energy cannot be stored there. In this case the energy storage 130 is disconnected, i.e. not used.

The method is for example a continuous control loop started once and running until turned off by an operator as depicted in figure 2.

In a step 201 of the method, information indicative of the actual load of the power grid is received. The actual load is for example received as described above in Kilowatt. Afterwards an optional step 202 is executed.

In the optional step 202, information indicative of the first condition is received. Afterwards an optional step 203 is executed.

In the optional step 203, information indicative of the second condition is received. Afterwards a step 204 is executed.

In the step 204 the statistics of the load characteristic is predicted depending on the received information. In case optional steps 202 and 203 are not executed, the information indicative about the first and second condition is for example read as predetermined information from storage.

The prediction of the load is for example calculated as described above by means of above cited methods and algorithms or extrapolation. The statistical parameters of the overall load characteristic, i.e. past and predicted, are determined.

Afterwards a step 205 is executed.

In the step 205 the predicted load characteristic is compared to the predetermined load characteristic. In case the first condition is satisfied, it is arranged for output from the energy storage 130. This means that an energy pulse injected into the system In case the second condition is satisfied, it is arranged for storage in the energy storage 130. In this case a load pulse is injected to the system. Optionally additional conditions are checked in this case, e.g. if the energy storage 130 is fully charged or not.

In case none of the conditions are met, the energy storage 130 is disconnected.

Afterwards step 201 is executed.

The steps described above may be in any other order. Some of the steps may be omitted for certain loops.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of the above-described method can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described method.

## Claims

1. A controller (100) for a system of controller (100) and energy storage (110), comprising
- a processor (101) operable to predict a load characteristic, in particular an electrical load characteristic or a load characteristic related to at least a part of a power grid (130), preferably a low voltage power grid (130), and
- an actuator (102) operable to control power transfer between the energy storage (110) and the power grid (130) depending on the predicted load characteristic.

2. The controller (100) according to claim 1, comprising a receiver (103) operable to receive information indicative of actual load.

3. The controller (100) according to claim 2 wherein the processor (101) is operable to derive statistical parameters of load pulse distribution depending on the received information.

4. The controller (100) according to claim 2 or 3, wherein the processor (101) is operable predict statistical parameters of load pulse distribution depending on the received information.

5. The controller (100) according to claim 4, wherein the processor (101) is adapted to predict the load characteristic by a statistical analysis of the actual load yielding a predicted load pulse distribution.

6. The controller (100) according to claim 5, wherein the actuator (102) is operable to arrange for output of energy from the energy storage (110), when the predicted load characteristic satisfies a first condition.

7. The controller (100) according to claim 6, wherein the receiver (103) is operable to receive information indicative of the first condition.

8. The controller (100) according to claim 4, wherein the actuator (102) is operable to arrange for storing energy in the energy storage (110) when the predicted load characteristic satisfies a second condition.

9. The controller (100) according to claim 8, wherein the receiver (103) is operable to receive information indicative of the second condition.

10. An energy storage (110) comprising a controller (100) according to one of the aforementioned claims.

11. A method for a system of a controller (100) and energy storage (110), comprising
- predicting (204) a load characteristic, in particular an electrical load characteristic or a load characteristic related to at least a part of a power grid (130), preferably a low voltage power grid (130), and
- controlling (205) power transfer between the energy storage (110) and the power grid (130) depending on the predicted load characteristic.

12. The method according to claim 11, comprising receiving (201) information indicative of actual load, and predicting (204) the load characteristic, in particular its statistical parameters, depending on the received information.

13. The method according to claim 11 or 12, wherein it is arranged for output of energy from the energy storage (110), when the predicted load characteristic satisfies a first condition.

14. The method according to claim 11 to 13, wherein it is arranged for storing energy in the energy storage (110) when the predicted load characteristic satisfies a second condition.

15. The method according to claim 14, wherein information indicative of the first condition or second condition is received (202, 203).

## Amended claims

### Amended claims in accordance with Rule 137(2) EPC.

**1.** A controller (100) for a system of controller (100) and energy storage (110), comprising
- a processor (101) adapted to predict a load characteristic, , and
- an actuator (102) adapted to control power transfer between the energy storage (110) and the power grid (130) depending on the predicted load characteristic, **characterized in that** the predicted load characteristic and a predetermined load pulse distribution are compared regarding the frequency of load pulses.

**2.** The controller (100) according to claim 1, comprising a receiver (103) adapted to receive information indicative of actual load.

**3.** The controller (100) according to claim 2 wherein the processor (101) is adapted to derive statistical parameters of load pulse distribution depending on the received information.

**4.** The controller (100) according to claim 2 or 3, wherein the processor (101) is adapted to predict statistical parameters of load pulse distribution depending on the received information.

**5.** The controller (100) according to claim 4, wherein the processor (101) is adapted to predict the load characteristic by a statistical analysis of the actual load yielding a predicted load pulse distribution.

**6.** The controller (100) according to claim 5, wherein the actuator (102) is adapted to arrange for output of energy from the energy storage (110), when the predicted load characteristic satisfies a first condition.

**7.** The controller (100) according to claim 6, wherein the receiver (103) is adapted to receive information indicative of the first condition.

**8.** The controller (100) according to claim 4, wherein the actuator (102) is adapted to arrange for storing energy in the energy storage (110) when the predicted load characteristic satisfies a second condition.

**9.** The controller (100) according to claim 8, wherein the receiver (103) is adapted to receive information indicative of the second condition.

**10.** An energy storage (110) comprising a controller (100) according to one of the aforementioned claims.

**11.** A method for a system of a controller (100) and energy storage (110), comprising
- predicting (204) a load characteristic, and
- controlling (205) power transfer between the energy storage (110) and the power grid (130) depending on the predicted load characteristic,
**characterized in that** the predicted load characteristic and a predetermined load pulse distribution are compared regarding the frequency of load pulses.

**12.** The method according to claim 11, comprising receiving (201) information indicative of actual load, and predicting (204) the load characteristic depending on the received information.

**13.** The method according to claim 11 or 12, wherein it is arranged for output of energy from the energy storage (110), when the predicted load characteristic satisfies a first condition.

**14.** The method according to claim 11 to 13, wherein it is arranged for storing energy in the energy storage (110) when the predicted load characteristic satisfies a second condition.

**15.** The method according to claim 14, wherein information indicative of the first condition or second condition is received (202, 203).
